Europäisches Patentamt

European Patent Office

Office européen des brevets

(19)

(11) Veröffentlichungsnummer: **0 245 318**
**B1**

(12) **EUROPÄISCHE PATENTSCHRIFT**

(45) Veröffentlichungstag der Patentschrift: **10.10.90**

(51) Int. Cl.⁵: **G 05 D 13/62**

(21) Anmeldenummer: **86906277.8**

(22) Anmeldetag: **30.10.86**

(86) Internationale Anmeldenummer:
**PCT/DE86/00435**

(87) Internationale Veröffentlichungsnummer:
**WO 87/03112 21.05.87 Gazette 87/11**

(54) SCHALTUNGSANORDNUNG ZUR ERZEUGUNG EINES DER FREQUENZ EINES WECHSELSTROMSIGNALS ZUGEORDNETEN MESSSIGNALS.

(30) Priorität: **07.11.85 DE 3539556**

(43) Veröffentlichungstag der Anmeldung:
**19.11.87 Patentblatt 87/47**

(45) Bekanntmachung des Hinweises auf die
Patenterteilung:
**10.10.90 Patentblatt 90/41**

(84) Benannte Vertragsstaaten:
**DE GB**

(56) Entgegenhaltungen:
**EP-A-0 124 642**
**FR-A-2 310 033**
**US-A-3 732 493**
**US-A-4 316 143**

(73) Patentinhaber: **PAPST-MOTOREN GMBH & CO. KG**
**Karl-Maier-Strasse 1**
**D-7742 St. Georgen (DE)**

(72) Erfinder: **DOEMEN, Benno**
**Talsteige 8**
**D-7742 St. Georgen (DE)**

Courier Press, Leamington Spa, England.

## Beschreibung

Die Erfindung betrifft eine Schaltungsanordnung zur Erzeugung eines der Frequenz eines Wechselstromsignals zugeordneten Gleichspannungsnutzsignals, insbesondere für die Gleichlaufregelung eines Elektromotors, mit einer Komparatorschaltung, die die zwei entgegengesetzte Polaritäten aufweisenden Halbwellen des Wechselstromsignals in Impulse umsetzt, deren Flanken einen Meß- und Steuerkreis triggern, durch den entsprechend den jeweiligen ab den Nulldurchgängen gemessenen Halbperiodendauern des Wechselstromsignals Gleichspannungen erzeugbar sind.

Es sind bereits zahlreiche Schaltungen zur Umwandlung der Frequenz einer sinusförmigen Signalspannung in eine zur Frequenz proportionale Gleichspannung bekannt, wobei häufig von dem Sample-Hold-Prinzip Gebrauch gemacht wird, um eine frequenzproportionale Gleichspannung mit hinreichend kleiner Restwelligkeit zu liefern. Dabei wird nach jedem Trigger-Signal eine zeitproportionale Spannung sprunghaft auf einen Speicherkondensator übertragen, die den vorangegangenen Meßwert ersetzt. Wählt man als Trigger-Signal nur den ansteigenden oder abfallenden Nulldurchgang der Signalspannung, so ist eine hohe Wiederholgenauigkeit erzielbar, aber man erhält nur ein Trigger-Signal pro volle Sinusschwingung. Es sind aber auch bereits Triggerschaltungen bekannt, die vor oder nach der Umwandlung der Sinusspannung in eine Rechteckspannung bei jedem Nulldurchgang ein Trigger-Signal liefern (Frequenzverdopplung). Diese Schaltungen sind bis zu einer gewissen Genauigkeit auch brauchbar. Will man jedoch eine sehr genaue Winkelgeschwindigkeitsmessung durchführen, um beispielsweise den Gleichlauf eines Motors zu gewährleisten oder zu messen, so müssen zwei Fehlerquellen kompensiert werden, von denen die eine durch die Offsetspannung des Komparators und die andere durch periodische systembedingte Oberwellen im Tachogenerator verursacht ist.

Ausgehend von diesem Stand der Technik liegt der Erfindung die Aufgabe zugrunde, eine Schaltungsanordnung der eingangs genannten Art zu schaffen, die sich durch eine hohe Meßgenauigkeit auszeichnet, wobei die Zeitverzögerung durch die bewirkte Frequenzdemodulation und durch die Filter sowie die Restwelligkeit der Gleichspannung sehr klein bleiben sollen.

Diese Aufgabe wird erfindungsgemäß dadurch gelöst, daß der Vergleichsspannungseingang des Komparators mit dem Ausgang eines Differenzschaltkreises verbunden ist, dessen beiden Eingänge jeweils an einen Spannungsspeicher angeschlossen sind, die über zugeordnete erste und zweite Schalter mit dem Gleichspannungsnutzsignal verbindbar sind, wobei über den ersten Schalter periodisch das den ersten Halbperioden zugeordnete Gleichspannungsnutzsignal und über den zweiten Schalter periodisch das den zweiten Halbperioden zugeordnete Gleichspannungsnutzsignal auskoppelbar ist.

Dadurch, daß das Gleichspannungsnutzsignal über die ersten und zweiten Schalter jeweils in Zuordnung zu den Halbperioden auskoppelbar ist, wird eine Regelung ermöglicht, die sicherstellt, daß die erfaßten Halbperioden oder Halbwellen gemittelt über einen zur Periodendauer langen Zeitraum gleich lang sind. Insbesondere werden dabei Driften der Offsetspannung des Komparators zuverlässig und sicher kompensiert, die ansonsten zu Meßungenauigkeiten führen würden. Die Spannungsspeicher können auf einfache Weise durch Speicherkondensatoren realisiert werden. Der Differenzschaltkreis ist bei einem zweckmäßigen Ausführungsbeispiel als Differenzverstärker aufgebaut, wobei der Regelkreis ein PI-Verhalten erhält.

Weitere zweckmäßige Ausgestaltungen und Weiterbildungen der Erfindung sind in den Unteransprüchen gekennzeichnet.

Nachfolgend wird die Erfindung anhand der Zeichnung näher erörtert. Es zeigen:

Fig. 1 ein Blockschaltbild der erfindungsgemäßen Schaltungsanordnung,

Fig. 2 ein Blockschaltbild gemäß Fig. 1 mit einer detaillierteren Darstellung des Meß- und Steuerkreises für die Zeitmessung und Steuerung und

Fig. 3 ein Blockschaltbild einer mikroprozessorgesteuerten Schaltungsanordnung gemäß der Erfindung.

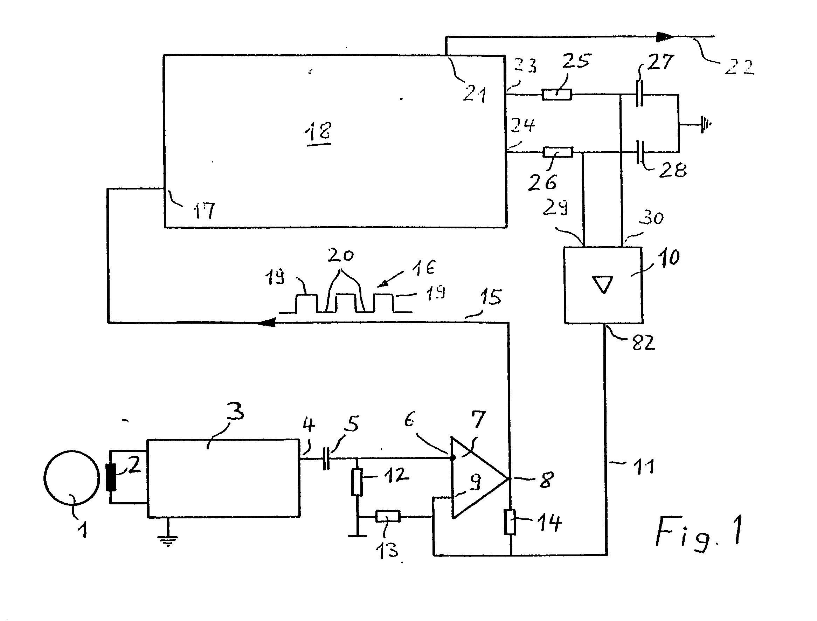

In Fig. 1 erkennt man eine schematisch dargestellte Tachowelle 1 eines Elektromotors, dessen Gleichlauf gemessen werden soll. Der Tachowelle 1 ist eine Tachospule 2 zugeordnet, mit der beispielsweise ein Wechselstromsignal mit einer Frequenz von 111 Hz abgegriffen wird. Die Tachospule 2 ist mit ihren beiden Enden mit dem Eingang eines Verstärker- und Bandfilterschaltkreises 3 verbunden, der die Wechselstromsignale der Tachospule 2 verstärkt und überlagerte Störspannungen, die die Symmetrie der Halbwellen des periodischen Wechselstromsignals verformen, verkleinert. Der Ausgang 4 des Verstärker- und Bandfilterschaltkreises 3 ist über einen Koppelkondensator 5 mit dem Signalspannungseingang 6 eines Komparators 7 verbunden, an dessen Ausgang 8 ein logisches Eins-Signal auftritt, wenn beispielsweise die Spannung am Signalspannungseingang 6 höher ist als die Spannung am Vergleichsspannungseingang 9. Bei einem Komparator 7 ohne Offsetspannung würde eine an den Signalspannungseingang 6 angelegte Sinuswechselspannung bei an Masse gelegtem Vergleichsspannungseingang 9 am Ausgang 8 ein impulsförmiges Signal liefern, dessen Impuls/Impulspausenverhältnis genau Eins wäre, d.h. das Signal hätte jeweils über gleich lange Zeiten abwechselnd einen Eins-Zustand und einen Null-Zustand.

Um Fehler infolge der Offsetspannung des Komparators 7 oder von Langzeitdriften und Temperaturdriften bei der Umsetzung des Wechselstromsignals in einen Impulszug zu vermeiden, ist der Vergleichsspannungseingang 9 mit dem Ausgang eines Differenzverstärkers 10 über eine Leitung 11 verbunden. Wie man in Fig. 1 weiter erkennt, ist der einen Operationsverstärker enthaltende Komparator 7 noch mit den Widerständen 12, 13 und 14 beschaltet. Über eine Leitung 15 gelangt das in einen digitalen Impulszug 16 umgesetzte ursprünglich sinusförmige Tachosignal zum Eingang 17 eines Meß- und Steuerkreises 18, der im wesentlichen ein Frequenz/Spannungs-Wandler ist.

In Abhängigkeit von der Dauer der Eins-Impulse 19 und der Null-Impulse 20 erzeugt der Meß- und Steuerkreis 18 Gleichspannungssignale, um eine genaue Frequenz/Spannungswandlung und dadurch eine präzise Gleichlaufmessung des mit der Tachowelle 1 verbundenen Motors zu gewährleisten.

Während am Ausgang 21 des Meß- und Steuerkreises 18 über eine Leitung 22 ein Gleichspannungsnutzsignal ausgekoppelt wird, dessen Spannung sich entsprechend den Änderungen der Frequenz des von der Tachospule 2 eingespeisten Wechselstromsignals ändert, liegen an den Ausgängen 22 und 23 Gleichspannungssignale an, deren Größe der zeitlichen Länge der Eins-Impulse 19 bzw. der zeitlichen Länge der Null-Impulse 20 zugeordnet ist. Bei einem völlig symmetrischen Impulszug 16 sind somit die Spannungen an den Ausgängen 23 und 24 gleich, weshalb sich mit den Ausgängen 23, 24 über Widerstände 25, 26 angeschlossene Speicherkondensatoren 27, 28 auf gleiche Spannungen aufladen. Verändert sich beispielsweise die Spannung am Vergleichsspannungseingang 9 des Komparators 7 in der Weise, daß die Eins-Impulse 19 länger und die Null-Impulse 20 kürzer werden, so vergrößert sich die der Dauer der Eins-Impulse 19 zugeordnete und beispielsweise am Ausgang 23 anliegende Spannung, während sich die am Ausgang 24 liegende Spannung verkleinert. Entsprechendes geschieht, wenn die Sinushalbwellen am Signalspannungseingang 6 positive Halbwellen aufweisen, deren Halbperiodendauer größer ist als die Halbperiodendauer der jeweils nachfolgenden negativen Halbwellen.

Während das Gleichspannungsnutzsignal auf der Leitung 22 auf Veränderungen im Tastverhältnis des Impulszuges 16 verhältnismäßig schnell ansprechen soll, soll der Regelkreis zur Erzeugung einer Spannung für den Vergleichsspannungseingang 9 des Komparators 7 zeitlich träger sein. Aus diesem Grunde sind die Werte der Widerstände 25, 26 und der Speicherkondensatoren 27, 28 so gewählt, daß die an den Eingängen 29, 30 des Differenzverstärkers 10 anliegenden Spannungen Mittelwerte über eine Vielzahl von Perioden des Wechselstromsignals am Signalspannungseingang 6 des Komparators sind.

Die in Fig. 1 dargestellte Schaltung mißt somit die Dauer der positiven und negativen Halbwellen der von der Tachospule 2 erzeugten Wechselstromsignale, wobei die als Gleichspannungssignal vorliegenden Ergebnisse getrennt in den Speicherkondensatoren 27, 28 gespeichert werden. Mit dem zeitlich trägen, den Komparator 7, den Meß- und Steuerkreis 18 und den Differenzverstärker 10 enthaltenden Regelkreis wird der Umschaltpunkt des Komparators 7 automatisch so verschoben, daß über einen relativ langen durch die Dimensionierung der Bauteile frei wählbaren Zeitraum die Summe der positiven und negativen vom Komparator 7 ausgesehenen Halbwellen gleich lang sind. Kurzzeitige Änderungen werden dabei über die Leitung 22 voll erfaßt und nur ein langsames Wegdriften, z.B. durch Temperaturänderungen im Schaltkreis des Komparators 7 oder Temperaturänderungen im Magnetkreis der Tachospule 2, werden ausgeregelt. Die in Fig. 1 dargestellte Schaltung gestattet somit die Umwandlung der Frequenz des von der Tachospule 2 gelieferten sinusförmigen Wechselstromsignals in eine zur. Frequenz proportionale Gleichspannung, wobei der Meß- und Steuerkreis 18 in jedem Nulldurchgang des sinusförmigen Wechselstromsignals eine erneute Zeitmessung beginnt. Die Bezugslinie für die Nulldurchgänge wird in der Regelschleife der Schaltung gemäß Fig. 1 nach dem Kriterium gebildet, daß über einen im Verhältnis zur Periodendauer sehr langen Zeitraum die an den Ausgängen 23 und 24 anstehenden Teilmeßergebnisse der positiven und negativen Halbwellen gleich lang sind.

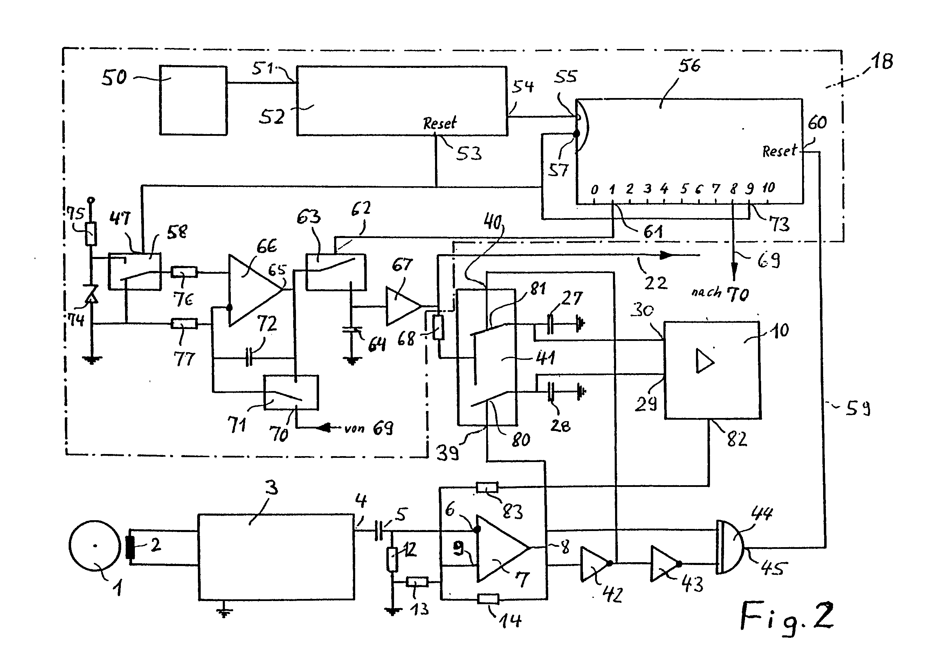

In Fig. 2 ist eine mögliche Schaltung für den Meß- und Steuerkreis 18 zusammen mit einer Ansteuerschaltung dargestellt, die es gestattet, die den positiven bzw. negativen Halbwellen zugeordneten Gleichspannungsanteile getrennt dem Differenzverstärker 10 zuzuführen. Die mit in Fig. 1 dargestellten Teilen übereinstimmenden Teile wurden in Fig. 2 mit den gleichen Bezugszeichen versehen.

Der Ausgang 8 des Komparators 7 ist mit dem ersten Steuereingang 39 eines CMOS-Analogschalterkreises 41 verbunden. Der zweite Steuereingang 40 des CMOS-Analogschalterkreises 41 ist mit einem gegenüber dem ersten Steuereingang invertierten Signal beaufschlagt, das am Ausgang eines ersten Inverters 42 abgegriffen wird, der mit seinem Eingang ebenfalls am Ausgang 8 des Komparators 7 angeschlossen ist. Dem ersten Inverter 42 ist ein zweiter Inverter 43 nachgeschaltet. Der Ausgang des zweiten Inverters 43 ist mit einem Eingang eines Exklusiv-Oder-Gatters 44 verbunden. Der zweite Eingang des Exklusiv-Oder-Gatters 44 liegt direkt am Ausgang 8 des Komparators 7. Infolge der Schaltverzögerung durch die beiden Inverter 42, 43 ergeben sich am Ausgang 45 des Exklusiv-Oder-Gatters 44 immer dann kurze Impulse, wenn der Komparator 7 umschaltet. Auf diese Weise werden jeder Halbwelle des Wechselstromsignals am Signalspannungseingang 6 des Komparators 7 kurze Impulse zugeordnet.

In Fig. 2 entspricht der strichpunktierte eingerahmte Teil der Schaltung im wesentlichen dem Meß- und Steuerkreis 18 gemäß Fig. 1. Er verfügt über einen Frequenzgenerator 50 mit einer Ausgangsfrequenz von beispielsweise 4 MHz. Der Ausgang des Frequenzgenerators 50 speist den Takteingang 51 eines Frequenzteilers 52, der durch einen 12-Bit-Zähler realisiert sein kann und einen Rücksetzeingang 53 sowie einen Ausgang 54 aufweist. Bei einer Frequenz von 4 MHz für den Frequenzgenerator 50 liegt am Ausgang 54 dann eine Frequenz von 1,953125 kHz an, wobei die Taktzeit des impulsförmigen Signals $T_A = 0,512$ ms beträgt.

Der Ausgang 54 des Frequenzteilers 52 ist mit dem Takteingang 55 eines Dekadenzählers 56 verbunden. Wie man in Fig. 2 weiter erkennt, ist der Ausgang 73 der letzten Stufe des Dekadenzählers 56 mit dessen Freigabeeingang 57 sowie dem Rücksetzeingang 53 des Frequenzteilers 52 und einem Steuereingang 47 eines Analogschalters 58 verbunden.

Wenn am Ausgang 45 des Exklusiv-Oder-Gatters 44 ein Impuls auftritt, wird dieser jeweils über eine Leitung 59 zum Rücksetzeingang 60 des Dekadenzählers 56 geführt. Der Dekadenzähler 56 wird daher auf Null gesetzt. Bei der ersten nach dem Rücksetzen auftretenden positiven Flanke am Takteingang 55 schaltet der Dekadenzähler 56 auf den Zählerstand 1 um, so daß am Ausgang 61 ein Steuersignal auftritt, das dem Steuereingang 62 eines Analogschalters 63, der ein Felddefekt-Analogschalter sein kann, zugeführt wird. Beim Schließen des Analogschalters 63 wird ein Speicherkondensator 64 mit dem Ausgang 65 eines als Integrator geschalteten Operationsverstärkers 66 verbunden. Die am Speicherkondensator 64 liegende Spannung gelangt über einen Spannungsfolger 67, der als Impedanzwandler dient, zu einem Widerstand 68, der eine den Widerständen 25 und 26 entsprechende Funktion hat. Außerdem gelangt das Ausgangssignal des Spannungsfolgers 67 zur Leitung 22, die die Ausgangsleitung der Schaltungsanordnung darstellt und das Gleichspannungsnutzsignal führt.

Beim Auftreten der zweiten positiven Flanke nach dem Rücksetzen des Dekadenzählers 56 schaltet der Dekadenzähler 56 in den Zählerstand 2 um, so daß am Ausgang 61 das Steuersignal wegfällt. Schließlich erreicht der Dekadenzähler 56 den Zählerstand 8 und liefert über die Leitung 69 ein Signal an den Steuereingang 70 eines weiteren Analogschalters 71, bei dessen Schließen der Speicherkondensator 72 der den Operationsverstärker 66 aufweisenden Integratorschaltung entladen wird.

Beim nächsten Impuls am Takteingang 55 schaltet der Dekadenzähler 56 auf den Zählerstand 9 und sperrt sich infolge der Rückkopplung des zugeordneten Ausgangs 73 mit dem Freigabeeingang 57. Gleichzeitig wird der Analogschalter 58 in die in der Zeichnung nicht dargestellte Stellung umgeschaltet, so daß der Operationsverstärker 66 als Zeitintegrator wirksam werden kann. Dazu ist an eine temperaturkompensierte Zenerdiode 74 über einen Widerstand 75 eine Gleichspannung angelegt, die über die Widerstände 76 und 77 zu den Eingängen des Operationsverstärkers 66 gelangt. Der zuletzt beschriebene Zustand dauert bei einer Genauigkeit von ± 1% für die Winkelgeschwindigkeit der Tachowelle 1 bei den oben angegebenen Frequenzen zwischen 0,103ms und 0,193ms.

Während dieser Meßzeit baut sich am Ausgang 65 eine Meßspannung auf, deren Höhe davon abhängt, wann am Ausgang 45 der nächste Rücksetzimpuls für den Dekadenzähler 56 auftritt, wobei dieser Rücksetzimpuls mit dem Beginn der nächsten Halbwelle am Signalspannungseingang 6 des Komparators 7 zusammenfällt. Nach dem Rücksetzen des Dekadenzählers 56 kann dieser wieder zu zählen beginnen und durch Betätigen des Analogschalters 63 den der Dauer der Halbwelle zugeordneten Spannungswert zum Speicherkondensator 64 weiterleiten, von wo er zur Leitung 22 und je nach der Stellung der Schalter 80, 81 des CMOS-Analogschalterkreises 41 auch zu dem Speicherkondensator 27 oder zum Speicherkondensator 28 gelangt. Die Schaltung kann so getroffen sein, daß alle den positiven Halbwellen zugeordneten Gleichspannungsnutzsignale den Speicherkondensator 27 aufladen, während alle den negativen Halbwellen zugeordnete Gleichspannungsnutzsignale den Speicherkondensator 28 speisen.

Wenn die erfaßten positiven und negativen Halbwellen gleich lang sind, liegen an den Eingängen 29, 30 des Differenzverstärkers 10 gleich hohe Spannungen an, so daß keine Nachregelung erfolgt. Wenn jedoch infolge einer Störung unterschiedliche Spannungen an den Eingängen 29, 30 auftreten, entsteht am Ausgang 82 des Differenzverstärkers 10 ein Regelsignal, das über einen Widerstand 83 zum Vergleichsspannungseingang 9 des Komparators 7 gelangt, so daß die Lage der die Nulldurchgänge der Wechselspannung definierenden Bezugsspannung verändert wird. Durch diese Nachregelung wird erreicht, daß das an der Leitung 22 anliegende Gleichspannungsnutzsignal immer ein genaues Maß für die Winkelgeschwindigkeit der Tachowelle 1 ist.

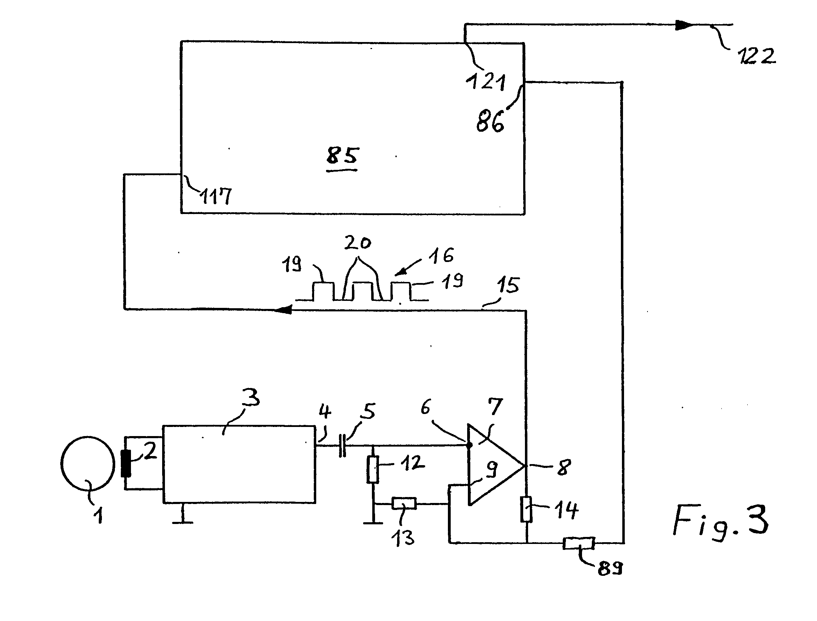

Bei dem in Fig. 3 dargestellten Ausführungsbeispiel sind diejenigen Teile, die mit den Teilen der in den Figuren 1 und 2 dargestellten Ausführungsbeispiele übereinstimmen mit den gleichen Bezugszeichen versehen. Die aus der Drehung der Tachowelle 1 abgeleiteten Impulse 19, 20 gelangen über die Leitung 15 zum Eingang 117 eines Mikroprozessorschaltkreises 85.

Der im Mikroprozessorschaltkreis 85 vorgesehene Mikroprozessor enthält einen Speicher, vorzugsweise einen Festwertspeicher, mit einem Programm, das es dem Mikroprozessor gestattet, die Frequenz der Impulse 19, 20 zu bestimmen und an seinem Meßsignalausgang 121 ein Meßsignal auf eine Leitung 122 zu geben, die beispielsweise ein Datenbus sein kann. In regelmäßigen Abständen wird die Impulsfrequenz am Eingang 117 ausgewertet, um ein Meßsignal zu erzeugen. Das Meßsignal kann beispielsweise jeweils aus einem oder mehreren 8-Bit-Worten bestehen, die zusammen jeweils einen digitalen Wert für das Meßsignal darstellen. Der Mikroprozessorschaltkreis 85 kann aber auch so ausgebildet sein, daß das digitale Ausgangssignal des Mikroprozessors in einem Digital/Analog-Umsetzer in eine Gleichspannung umgesetzt wird, die über die Leitung 122 ausgegeben wird, um beispielsweise die Drehzahl eines mit der Tachowelle 1 gekoppelten Motors zu regeln oder dessen Gleichlauf zu überwachen.

Das im Speicher des Mikroprozessorschaltkreises 85 gespeicherte Programm bestimmt aber nicht nur die über mehrere Impulse gemittelte Impulsfrequenz, sondern überwacht auch, ob die aus den positiven Halbwellen und den negativen Halbwellen durch den Komparator 7 erzeugten Impulse gleich lang sind. Dazu wird mit Hilfe des Mikroprozessors beispielsweise über zehn Perioden des Wechselstromsignals ein Wert für die mittlere Dauer der den positiven Halbwellen zugeordneten Impulse gebildet. Entsprechend wird ein Wert für die Dauer der den negativen Halbwellen zugeordneten mittleren Impulsdauer bestimmt. Wenn die Impulslängen dieser Impulse 19, 20 gleich sind, ist es nicht erforderlich, das am Vergleichsspannungseingang 9 des Komparators 7 anliegende Gleichspannungssignal zu verändern. Ergibt sich jedoch eine Abweichung zwischen den den positiven Halbwellen zugeordneten Impulslängen und den den negativen Halbwellen zugeordneten Impulslängen, so errechnet der Mikroprozessor diese Differenz und liefert ein entsprechendes Korrektursignal am Steuersignalausgang 86, das dem Vergleichsspannungseingang 9 zugeführt wird.

Das am Steuersignalausgang 86 auftretende Signal kann aber ein vorzeichenbehaftetes Gleichspannungssignal sein, das mit Hilfe eines Digital/Analog-Umsetzers gewonnen wurde, der im Mikroprozessorschaltkreis 85 enthalten ist, oder dessen Eingang mit einem Datenausgang des Mikroprozessors verbunden ist, an dem das jeweilige Korrektursignal, beispielsweise als 8-Bit-Wort, vorliegt.

Die zur Programmierung in Maschinensprache erforderlichen Befehle hängen von der Konfiguration des jeweils in dem Mikroprozessorschaltkreis 85 vorgesehenen Mikroprozessors ab und sind dem Fachmann bekannt, weshalb auf eine detailliertere Beschreibung der Maschinenprogramme verzichtet wird.

**Patentansprüche**

1. Schaltungsanordnung zur Erzeugung eines der Frequenz eines Wechselstromsignals zugeordneten Meßsignals, insbesondere für die Gleichlauf-Messung oder Regelung eines Elektromotors, mit einer Komparatorschaltung, die die zwei entgegengesetzte Polaritäten aufweisenden Halbwellen des Wechselstromsignals in Impulse umsetzt, deren Flanken einen Meß- und Steuerschaltkreis triggern, durch den den jeweiligen ab den Nulldurchgängen gemessenen Halbperiodendauern des Wechselstromsignals entsprechende Digital- bzw. Gleichspannungssignale als Meßsignale erzeugbar sind, dadurch gekenzeichnet, daß die Meßsignale getrennt nach Zugehörigkeit zu positiven und negativen Halbwellen des Wechselstromsignals fortlaufend über mehrere Perioden gemittelt und gespeichert werden und die Differenz aus den gespeicherten Werten dem Vergleichspannungseingang (9) des Komparators (7) als Korrektursignal zugeführt wird.

2. Schaltungsanordnung zur Erzeugung eines der Frequenz eines Wechselstromsignals zugeordneten Gleichspannungsnutzsignals, insbesondere für die Gleichlaufregelung eines Elektromotors, mit einer Komparatorschaltung, die die zwei entgegengesetzte Polaritäten aufweisenden Halbwellen des Wechselstromsignals in Impulse umsetzt, deren Flanken einen Meß- und Steuerkreis triggern, durch den entsprechend den jeweiligen ab den Nulldurchgängen gemessenen Halbperiodendauern des Wechselstromsignals Gleichspannungen erzeugbar sind, dadurch gekennzeichnet, daß der Vergleichsspannungseingang (9) des Komparators (7) mit dem Ausgang (82) eines Differenzschaltkreises (10) verbunden ist, dessen beiden Eingänge (29, 30) jeweils an einen Spannungsspeicher (27, 28) angeschlossen sind, die über zugeordnete erste und zweite Schalter (80, 81) mit dem Gleichspannungsnutzsignal (22) verbindbar sind, wobei über den ersten Schalter (80) periodisch das den ersten Halbperioden zugeordnete Gleichspannungsnutzsignal und über den zweiten Schalter (81) periodisch das den zweiten Halbperioden zugeordnete Gleichspannungsnutzsignal auskoppelbar ist.

3. Schaltungsanordnung nach Anspruch 2, dadurch gekennzeichnet, daß die Spannungsspeicher Speicherkondensatoren (27, 28) sind.

4. Schaltungsanordnung nach Anspruch 2 oder 3, dadurch gekennzeichnet, daß der Differenzschaltkreis ein Differenzverstärker (10) ist, der als PI-Regler geschaltet ist.

5. Schaltungsanordnung nach Anspruch 3 oder 4, dadurch gekennzeichnet, daß das Gleichspannungsnutzsignal (22) über einen Widerstand (68, 25, 26) zu den Speicherkondensatoren (27, 28) auskoppelbar ist.

6. Schaltungsanordnung nach einem der vorstehenden Ansprüche, dadurch gekennzeichnet, daß die beiden Schalter (80, 81) CMOS-Analogschalter sind, von denen der eine mit seinem Steuereingang (39) unmittelbar und der andere mit seinem Steuereingang (40) über einen Inverter (42) mit dem Ausgang (8) des Komparators (7) verbunden ist.

7. Schaltungsanordnung nach einem der vorstehenden Ansprüche, dadurch gekennzeichnet, daß der Signalspannungseingang (6) des Komparators (7) mit dem Ausgang (4) eines Verstärker- und Bandfilterschaltkreises (3) verbunden ist.

8. Schaltungsanordnung nach Anspruch 7, dadurch gekennzeichnet, daß der Eingang des Verstärker- und Bandfilterschaltkreises (3) mit einer Tachospule (2) verbunden ist, die der Tachowelle (1) eines Elektromotors zugeordnet ist.

9. Schaltungsanordnung nach Anspruch 5, dadurch gekennzeichnet, daß die Zeitkonstante des die Speicherkondensatoren (27, 28) enthaltenden Regelkreises ein Vielfaches der Periodendauer des Wechselstromsignals ist.

10. Schaltungsanordnung zur Erzeugung eines der Frequenz eines Wechselstromsignals zugeordneten Meßsignals, insbesondere für die Erfassung der Drehzahl oder des Gleichlaufs eines Elektromotors, mit der einer Komparatorschaltung, die zwei entgegengesetzte Polaritäten aufweisende Halbwellen des Wechselstromsignals in Impulse umsetzt, deren Flanken einen Meß- und Steuerschaltkreis triggern, durch den entsprechend den jeweiligen ab den Nulldurchgängen gemessenen Halbperiodendauern des Wechselstromsignals Meßsignale erzeugbar sind, dadurch gekennzeichnet, daß der Vergleichsspannungseingang (9) des Komparators (7) über eine Glättungsschaltung mit dem Steuersignalausgang (86) eines Mikroprozessorschaltkreises (85) verbunden ist, an dessen Eingang (117) der Impulse liefernde Ausgang (8) des Komparators (7) angeschlossen ist und der an seinem Meßsignalausgang (121) ein der Drehzahl (1, 2) zugeordnetes Meßsignal (122) und an seinem Steuersignalausgang (86) ein Korrektursignal liefert, dessen Größe ein Maß für die über mehrere Impulse (19, 20) gemittelte Differenz zwischen der Dauer der den positiven Halbwellen und der den negativen Halbwellen zugeordneten Impulse (19, 20) ist.

11. Schaltungsanordnung nach Anspruch 10, dadurch gekennzeichnet, daß der Steuersignalausgang (86) der Ausgang eines in dem Mikroprozessorschaltkreis (85) enthaltenen Digital/Analogumsetzers ist.

**Revendications**

1. Agencement de circuit pour engendrer un signal de mesure associé à la fréquence d'un signal de courant alternatif, notamment en vue du mesurage du synchronisme, ou du réglage d'un moteur électrique, comportant un circuit comparateur qui convertit les deux demi-ondes du signal de courant alternatif, présentant des polarités inverses, en des impulsions dont les flancs déclenchent un circuit commutateur de mesurage et de commande par l'intermédiaire duquel peuvent être engendrés, en tant que signaux de mesure, des signaux respectivement numériqués ou de tension continue, correspondant aux durées respectives des demi-périodes du signal de courant alternatif, mesurées à partir des passages par zéro, caractérisé par le fait que les signaux de mesure sont établis et mémorisés séparément, en continu sur plusieurs périodes, selon l'appartenance à des demi-ondes positives et négatives du signal de courant alternatif, et la différence résultant des valeurs mémorisées est délivrée, en tant que signal de correction, à l'entrée (9) de tension de référence du comparateur (7).

2. Agencement de circuit pour engendrer un signal utile de tension continue, associé à la fréquence d'un signal de courant alternatif, notamment en vue du réglage du synchronisme d'un moteur électrique, comportant un circuit comparateur qui convertit les deux demi-ondes du signal de courant alternatif, présentant des polarités inverses, en des impulsions dont les flancs déclenchent un circuit de mesurage et de commande, par l'intermédiaire duquel des tensions continues peuvent être engendrées en concordance avec les durées respectives des demi-périodes du signal de courant alternatif, mesurées à partir des passages par zéro, caractérisé par le fait que l'entrée (9) de tension de référence du comparateur (7) est raccordée à la sortie (82) d'un circuit commutateur différentiel (10) dont les deux entrées (29, 30) sont respectivement connectées à un accumulateur de tension (27, 28), pouvant être raccordé au signal utile (22) de tension continue par l'intermédiaire de premier et second interrupteurs associés (80, 81), le signal utile de tension continue associé aux premières demi-périodes pouvant être découplé périodiquement par l'intermédiaire du premier interrupteur (80), et le signal utile de tension continue associé aux secondes demi-périodes pouvant être découplé périodiquement par l'intermédiaire du second interrupteur (81).

3. Agencement de circuit selon la revendication 2, caractérisé par le fait que les accumulateurs de tension sont des condensateurs d'accumulation (27, 28).

4. Agencement de circuit selon la revendication 2 ou 3, caractérisé par le fait que le circuit commutateur différentiel est un amplificateur différentiel (10), branché en tant que régulateur PI.

5. Agencement de circuit selon la revendication 3 ou 4, caractérisé par le fait que le signal utile (22) de tension continue peut être découplé, par l'intermédiaire d'une résistance (68, 25, 26), vers les condensateurs d'accumulation (27, 28).

6. Agencement de circuit selon l'une des revendications précédentes, caractérisé par le fait que les deux interrupteurs (80, 81) sont des interrupteurs analogiques CMOS, dont l'un est raccordé par son entrée de commande (39), de manière directe, et l'autre est raccordé par son entrée de commande (40), par l'intermédiaire d'un inverseur (42), à la sortie (8) du comparateur (7).

7. Agencement de circuit selon l'une des revendications précédentes, caractérisé par le fait que l'entrée (6) de tension de signal du comparateur (7) est raccordée à la sortie (4) d'un circuit amplificateur et passe-bande (3).

8. Agencement de circuit selon la revendication 7, caractérisé par le fait que l'entrée du circuit amplificateur et passe-bande (3) est raccordée à une bobine tachymétrique (2), associée à l'arbre tachymétrique (1) d'un moteur èlectrique.

9. Agencement de circuit selon la revendication 5, caractérisé par le fait que la constante de temps du circuit régulateur renfermant les condensateurs d'accumulation (27, 28) est un multiple de la durée de période du signal de courant alternatif.

10. Agencement de circuit pour engendrer un signal de mesure associé à la fréquence d'un signal de courant alternatif, notamment en vue de la dètection de la vitesse angulaire ou du synchronisme d'un moteur électrique, comportant un circuit comparateur qui convertit deux demi-ondes du signal de courant alternatif, présentant des polarités inverses, en des impulsions dont les flancs déclenchent un circuit commutateur de mesurage et de commande, par l'intermédiaire duquel des signaux de mesure peuvent être engendrés en concordance avec les durées respectives des demi-périodes du signal de courant alternatif, mesurées à partir des passages par zéro, caractérisé par le fait que l'entrée (9) de tension de référence du comparateur (7) est raccordée, par l'intermédiaire d'un circuit de lissage, à la sortie (86) de signaux de commande d'un circuit commutateur microprocesseur (85), à l'entrée (117) duquel est connectée la sortie (8) du comparateur (7), délivrant des impulsions, et qui délivre, à sa sortie (121) de signaux de mesure, un signal de mesure (122) associé à la vitesse angulaire (1, 2) et, à sa sortie (86) de signaux de commande, un signal de correction dont la grandeur représente une indication de la différence, établie sur plusieurs impulsions (19, 20), entre la durée des impulsions (19, 20) respectivement associées aux demi-ondes positives et aux demi-ondes négatives.

11. Agencement de circuit selon la revendication 10, caractérisé par le fait que la sortie (86) de signaux de commande est la sortie d'un convertisseur numérique/analogique renfermé par le circuit commutateur microprocesseur (85).

## Claims

1. Circuit arrangement for generating a measurement signal associated with the frequency of an alternating current signal, particularly for measuring or regulating the synchronism of an electric motor, the circuit including a comparator circuit which converts the two opposite polarity halfwaves of the alternating current signal into pulses whose edges trigger a measuring and control circuit able to generate measurement signals in the form of digital or direct voltage signals, respectively, which correspond to the half-period durations of the alternating current signal measured from the respective zero passages, characterized in that the measurement signals are averaged and stored separately and continuously over a plurality of periods according to their association with positive or negative halfwaves of the alternating current signal, and the difference of the stored values is fed as a correction signal to the comparison voltage input (9) of the comparator (7).

2. Circuit arrangement for generating a useful direct voltage signal associated with the frequency of an alternating current signal, particularly for regulating the synchronism of an electric motor, the circuit including a comparator circuit which converts the two opposite polarity halfwaves of the alternating current signal into pulses whose edges trigger a measuring and control circuit which generates direct voltages corresponding to the half-period durations of the alternating current signal measured from the respective zero passages, characterized in that the comparison voltage input (9) of the comparator (7) is connected with the output (82) of a difference switching circuit (10) whose two inputs (29, 30) are each connected to a voltage store (27, 28) connectable, via associated first and second switches (80, 81) with the useful direct voltage signal (22), with the first switch (80) being used to periodically couple out the useful direct voltage signal associated with the first half-periods and the second switch (81) being used to periodically couple out the useful direct voltage signal associated with the second half-periods.

3. Circuit arrangement according to claim 2, characterized in that the voltage stores are storage capacitors (27, 28).

4. Circuit arrangement according to claim 2 or 3, characterized in that, the difference switching circuit is a differential amplifier (10) which is connected as PI controller.

5. Circuit arrangement according to claim 3 or 4, characterized in that the useful direct voltage signal (22) is coupled-out to the storage capacitors (27, 28) via a resistor (68, 25, 26).

6. Circuit arrangement according to one of the preceding claims, characterized in that the two switches (80, 81) are CMOS analog switches, one of which has its control input (39) connected directly with the output (8) of the comparator (7) while the other switch has its control input (40) connected with the output (8) of the comparator (7) via an inverter (42).

7. Circuit arrangement according to one of the preceding claims, characterized in that the signal voltage input (6) of the comparator (7) is connected with the output (4) of an amplifier and bandpass filter circuit (3).

8. Circuit arrangement according to claim 7, characterized in that the input of the amplifier and bandpass filter circuit (3) is connected with a tacho coil (2) associated with the tacho shaft (1) of an electric motor.

9. Circuit arrangement according to claim 5, characterized in that the time constant of the regulating circuit including the storage capacitors (27, 28) is a multiple of the period duration of the alternating current signal.

10. Circuit arrangement for generating a measurement signal associated with the frequency of an alternating current signal, particularly for detecting the rotational speed or the synchronism of an electric motor, the circuit including a comparator circuit which converts two opposite polarity halfwaves of the alternating current signal into pulses whose edges trigger a measuring and control circuit which generates measurement signals corresponding to the half-period durations of the alternating current signal measured from the respective zero passages, characterized in that the comparison voltage input (9) of the comparator (7) is connected via a smoothing circuit with the control signal output (86) of a microprocessor circuit (85) whose input (117) is connected with the pulse furnishing output (8) of the comparator (7), said microprocessor circuit furnishing at its measurement signal output (121) a measurement signal (122) associated with the rotational speed (1, 2) and at its control signal output (86) a correction signal whose magnitude is a measure of the difference, averaged over a plurality of pulses (19, 20), between the duration of the pulses (19) associated with the positive halfwaves and the duration of the pulses (20) associated with the negative halfwaves.

11. Circuit arrangement according to claim 10, characterized in that the control signal output (86) is the output of a digital/analog converter included in the microprocessor circuit (85).

Fig. 1

Fig.2

Fig. 3